# EUROPEAN PATENT APPLICATION

(11) **EP 1 580 443 A2**
(43) Date of publication of application: **28.09.2005**
(21) Application number: 05005433.7
(22) Date of filing: 12.03.2005
(51) Int. Cl.: F16B 13/06, F16B 13/08

(54) **Anchoring Device**

(30) Priority: 22.03.2004 US 555391; 07.02.2005 US 52704
(71) Applicant: ILLINOIS TOOL WORKS INC., Illinois 60026-1215 (US)
(72) Inventor: Leatherman, Barth A., Oshkosh Wisconsin 54902 (US); Ernst, Richard J., San Diego California 92130 (US)
(74) Representative: Rupprecht, Kay

(57) **Abstract**

The present invention relates to anchor devices for securing fasteners. In particular, the present invention relates to a sleeve anchor for securing threaded fasteners in pre-drilled holes.

## Description

### CROSS REFERENCE TO RELATED APPLICATION

This Application claims priority to U.S. Provisional Application Serial No. 60/555,391, filed March 22, 2004, which is herein incorporated by reference in its entirety.

### FIELD OF THE INVENTION

The present invention relates to anchor devices for securing fasteners. In particular, the present invention relates to an anchor for securing fasteners in pre-drilled holes.

### BACKGROUND

Anchoring devices are commonly used to secure fasteners in locations not suited to receive such agents (e.g., concrete ceilings). Examples of such anchoring devices include U.S. Patent Nos. 1,116,710; 4,978,265; 5,704,752; 6,652,207; and 6,273,655. Limitations with presently available anchoring devices include inconveniently high insertion forces, and slow installation speeds. Additionally, heat treatment of anchoring devices often results in the deformation of the device rendering them useless or less than effective. There is a need for improved anchoring devices capable of withstanding heat treatment while providing quick installation speeds and reduced insertion force, yet while also providing a high holding or retention forces.

### SUMMARY OF THE INVENTION

The present invention provides an anchor device for securing fasteners. In particular, the present invention provides a sleeve anchor for securing threaded fasteners in pre-drilled holes.

In certain embodiments, the present invention provides an anchor for insertion into a hole having sides. In preferred embodiments the anchor comprises an elongated sleeve comprising two ends and an exterior surface, the elongated sleeve having a longitudinal axis and having therein a slot parallel to the longitudinal axis, the slot running the length of the elongated sleeve, and an attachment member on one of the two ends of the elongated sleeve, the elongated sleeve being insertable into the hole so that the linear slot collapses as the exterior surface of the elongated sleeve engages the sides of the hole thereby securing the elongated sleeve within the hole.

In a preferred embodiment, the linear slot is defined by opposing first and second sleeve edges. In some preferred embodiments, the opposing first and second sleeve edges engage upon insertion of the device into the hole. In other preferred embodiments, the at least one of the opposing first and second sleeve edges comprises at least one outwardly extending tab. In yet other preferred embodiments, the other of the opposing first and second sleeve edges is substantially linear. In preferred embodiments, the at least one outwardly extending tab engages the linear sleeve edge upon insertion of the device into the hole.

In a preferred embodiment, the attachment member includes threads. In other preferred embodiments, the threads are on the inside of the elongated sleeve and engageable with a threaded fastener. In other preferred embodiments, the attachment member comprises an outwardly extending member having an opening therein.

In certain embodiments, the present invention provides a system for anchoring an object in a hole, wherein the system comprises an elongated sleeve having two ends and an interior surface, the elongated sleeve having a longitudinal axis and having therein a slot parallel to the longitudinal axis, the slot running the length of the elongated sleeve and defined by opposing first and second sleeve edges, a threaded fastener, and an attachment member on one of the two ends of the elongated sleeve, the attachment member comprising threads on the interior surface of the end of the elongated sleeve.

In preferred embodiments, the opposing first and second sleeve edges are configured to engage one another upon compression of the elongated sleeve by inserting the elongated sleeve into the hole so that the threads are engageable with the threaded fastener. In other preferred embodiments, the at least one of the opposing first and second sleeve edges comprises at least one outwardly extending tab, wherein upon compression of the elongated sleeve the slot collapses so that the outwardly extending tab engages the other of the sleeve edges and the threads are engageable with the threaded fastener.

Other features and advantages of the invention will become apparent to those skilled in the art upon review of the following detailed description, claims and drawings in which like numerals are used to designate like features.

### BRIEF DESCRIPTION OF THE DRAWINGS

FIGS: 1A and 1B show opposite sides of a sleeve anchor device with an attachment member comprising an opening.

FIG. 2 shows a side view of a sleeve anchor device with an attachment member comprising an opening.

FIG. 3 shows a side view of a sleeve anchor device with an attachment member comprising threads.

FIG. 4 shows a side view of a sleeve anchor device with an attachment member comprising threads and the first sleeve end cut away.

FIG. 5 shows a threaded fastener positioned within a sleeve anchor device.

Before the embodiments of the invention are explained in detail, it is to be understood that the invention is not limited in its application to the details of construction and the arrangement of the components set forth in the following description or illustrated in the drawings. The invention is capable of other embodiments and of being practiced or being carried out in various ways. Also, it is to be understood that the phraseology and terminology used herein are for the purpose of description and should not be regarded as limiting. The use of "including", "comprising" and "having" and variations thereof is meant to encompass the items listed thereafter and equivalents thereof as well as additional items and equivalents thereof.

### DETAILED DESCRIPTION OF THE PREFFERRED EMBODIMENTS

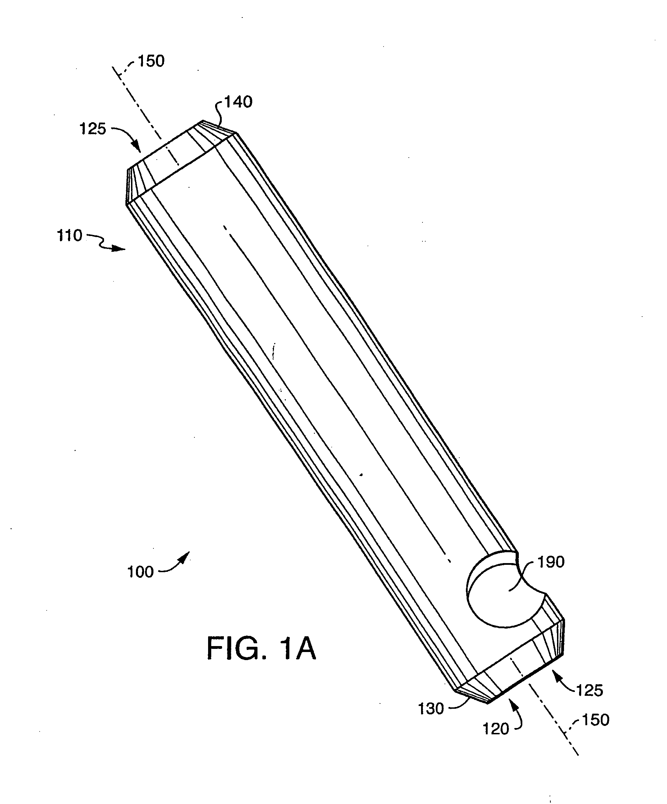

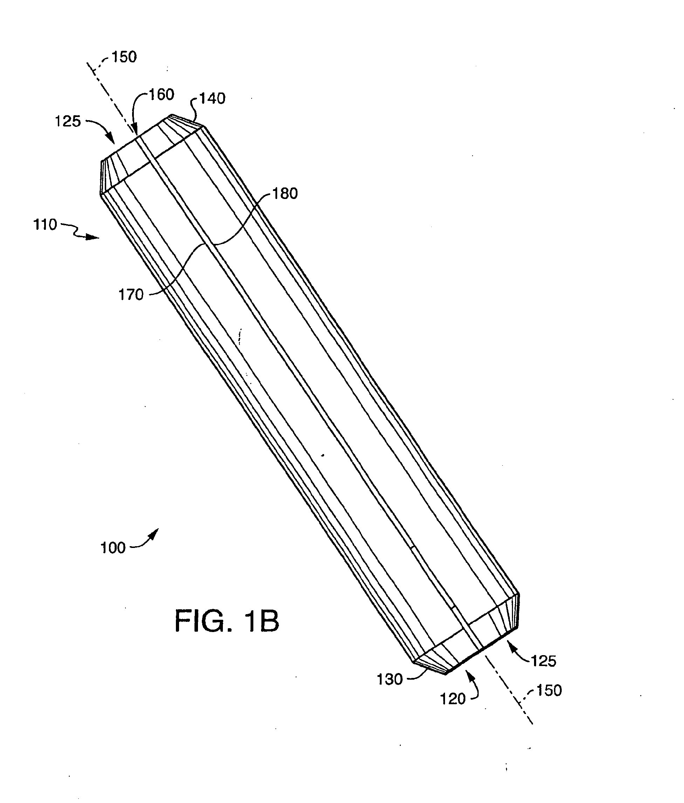

The following discussion relates to a device for anchoring a sleeve in accordance with certain preferred embodiments of the present invention. FIGS. 1 - 5 illustrate various preferred embodiments of the push-in fasteners of the present invention. The present invention is not limited to these particular embodiments.

Preferred embodiments of a sleeve anchor device of the present invention are provided in FIGS. 1 - 5. The sleeve anchor device is applicable for use as a ceiling hanger, and in particular, for use as a concrete ceiling hanger. The sleeve anchor device permits the supporting of heavy loads (e.g., electrical lines, plumbing lines, ceiling tiles, hanging conduits, and the like). The sleeve anchor device of the present invention has numerous advantages over previous prior art devices including, but not limited to, pull-out values exceeding industry standards, reduced insert forces, increased installation speeds, and reduced distortion upon heat treatment. The present invention is not limited to any particular mechanism. Indeed, an understanding of the mechanism is not necessary to practice the present invention. Nevertheless, it is contemplated that the sleeve anchor device functions on the principle that the device collapses in size as it is positioned in a hole, generating opposing forces between the device and the hole, thereby securing the device within the hole (described in more detail below).

FIGS. 1A and 1B show opposite sides of a sleeve anchor embodiment of the present invention. Referring to FIGS. 1A and 1B, in some embodiments, a sleeve anchor **100** generally comprises an elongated sleeve **110.** and an attachment member **120.** The sleeve anchor **100** is not limited to a particular material composition (e.g., steel, iron, aluminum, or mixture thereof). In preferred embodiments, the material composition of the sleeve anchor **100** is metal. The sleeve anchor **100** is not limited to a particular length or width. The elongated sleeve **110** is configured to fit inside of a hole (e.g., pre-drilled hole) in a manner facilitating the securing of the sleeve anchor **100** within the hole. Additionally, in some embodiments, the elongated sleeve **110** is configured to accept and secure a threaded fastener. In preferred embodiments, the diameter of the elongated sleeve **110** is larger than the diameter of the hole, and insertion of the sleeve anchor **100** within the hole causes the elongated sleeve **110** to collapse in size.

Still referring to FIGS. 1A and 1B, the elongated sleeve **110** comprises a first sleeve end **130,** a second sleeve end **140,** and has a longitudinal axis **150.** The elongated sleeve **110** has therein a linear slot **160** defined by linear slot sleeve edges **170** and **180** (shown in FIG. 1B). In preferred embodiments, the elongated sleeve **110** is hollow with openings **125** at the first sleeve end **130** and second sleeve end **140**. The elongated sleeve **110** is not limited to a particular shape (e.g., oval, square, tubular). In preferred embodiments, the shape of the elongated sleeve **110** is tubular. In preferred embodiments, the anchor sleeve **100** is configured to be secured within a hole (not shown) in a manner such that the second sleeve end **140** is inserted into a hole while the first sleeve end **130** is exposed outside of the hole.

Still referring to FIGS. 1A and 1B, the longitudinal axis **150** runs along the length of the elongated sleeve **110** (e.g., from the first sleeve end **130** to the second sleeve end **140**). Referring to FIG. 1B, in some embodiments, the linear slot **160** extends along the length of the elongated sleeve **110** in parallel with the longitudinal axis **150.** In some embodiments, the linear slot **160** extends through the side of the elongated sleeve **110** thereby generating a gap opposed by the linear slot sleeve edges **170** and **180.** In preferred embodiments, the linear slot sleeve edges **170** and **180** are substantially linear. The linear slot **160** is not limited to a particular width. In preferred embodiments, the collapsing of the elongated sleeve **110** as it is inserted into a hole causes a narrowing of the width of the linear slot **160** as the linear slot sleeve edges **170** and **180** are compressed towards one another. The linear slot **160** permits the sleeve anchor **100** to fit within various hole sizes through accommodation of its size. Additionally, the ability of the linear slot **160** to accommodate its width permits the sleeve anchor **100** to undergo various treatments (e.g., heat treatment) without comprising its overall shape due to treatment side effects (e.g., heat expansion).

Referring to FIG. 1A, the attachment member **120** is not limited to a particular position along the sleeve anchor **100.** In preferred embodiments, the attachment member **120** is positioned near the first sleeve end **130.** Upon insertion of a sleeve anchor **100** into a hole, the attachment member **120** remains exposed outside of the hole, or at least accessible for further use. In some embodiments, the attachment member **120** serves to secure a fastener (e.g., threaded fastener) with the sleeve anchor **100.**

Still referring to FIG. 1A, in some embodiments, the attachment member **120** has therein an opening **190** through which a fastener or other device such as a wire hanger may be inserted. The opening **190** is not limited to a particular size. A feature of the present invention is that the anchor **100** can be easily inserted into a mating hole with a hammer or other suitable device. The linear slot **160** within the anchor **100** allows the elongated sleeve **110** to collapse a sufficient amount to provide a press/friction fit in the mating hole.

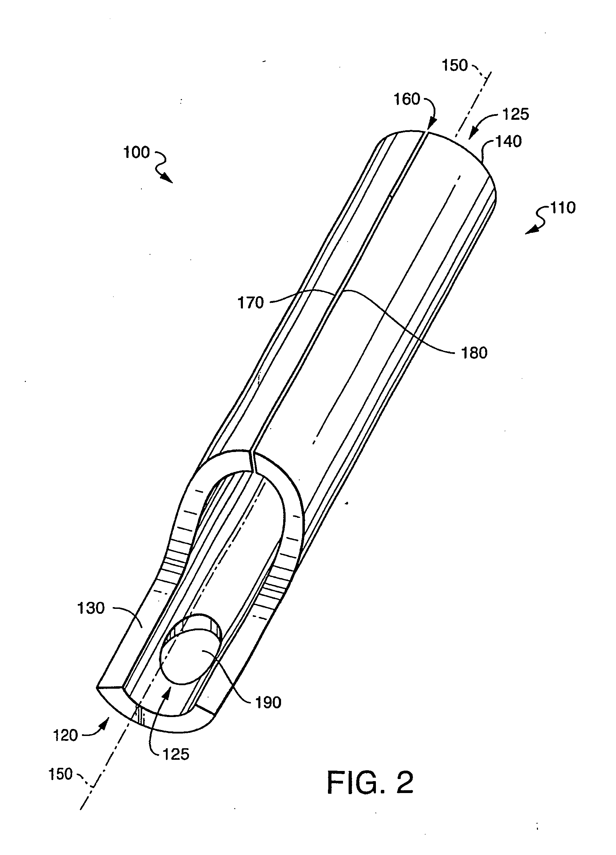

FIG. 2 depicts an alternative anchor sleeve **100.** As shown, the elongated sleeve **110** is hollow with openings **125** at the first sleeve end **130** and second sleeve end **140,** and has therein a linear slot **160** opposed by linear slot edges **170** and **180.** The linear slot **160** further is shown running in parallel with the longitudinal axis **150.** The attachment member **120** is shown near the first sleeve end **130** having therein an opening **190** for accepting fasteners.

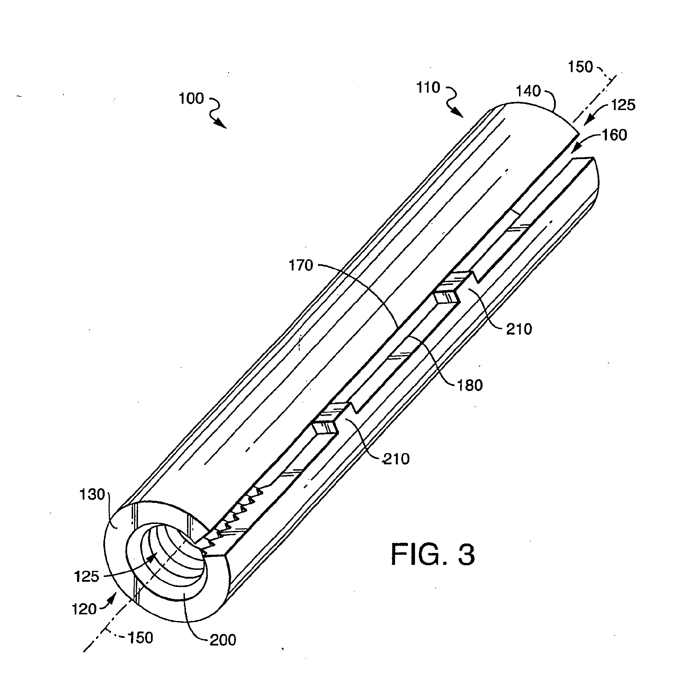

FIG. 3 depicts an alternative anchor sleeve **100** embodiment, wherein the elongated sleeve **110** is hollow with openings **125** at the first sleeve end **130** and second sleeve end **140,** and has therein a linear slot **160** opposed by linear slot edges **170** and **180.** The linear slot **160** further is shown running in parallel with the longitudinal axis **150.** As shown in FIG. 3, the attachment member **120** includes threads **200** for accepting a threaded fastener. The threads **200** may be positioned on the interior or exterior of the elongated sleeve **110.** In preferred embodiments, the threads **200** are positioned on the interior of the elongated sleeve **110.**

Still referring to FIG. 3, at least one of the linear slot sleeve edges **170** or **180** comprise at least one outwardly extending tab **210.** In preferred embodiments, two outwardly extending tabs **210** are positioned along one of the linear slot sleeve edges **170** or **180.** The outwardly extending tabs **210** are not limited to a particular location along the length of a linear slot sleeve edge **170** or **180.** The outwardly extending tabs **210** are not limited to a particular width or height. In preferred embodiments, the outwardly extending tabs **210** prevent the linear slot sleeve edges **170** and **180** from engaging as the elongated sleeve **110** collapses. Preventing the linear slot sleeve edges **170** and **180** from engaging further protects the integrity of the sleeve anchor **100** upon insertion into a hole. Additionally, preventing the linear slot edges **170** and **180** from engaging protects the integrity of a threaded fastener secured within the elongated sleeve **110.** The tabs **210** prevent the sleeve from collapsing to far during installation and upon heat treatment or other treatment of the anchor **100.**

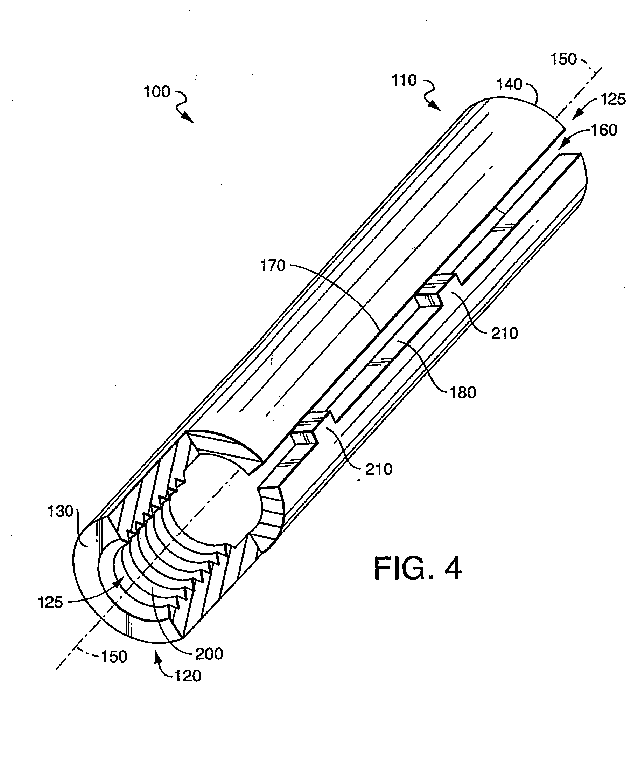

FIG. 4 shows an anchor sleeve **100** embodiment with the first sleeve end **130** partially cut away. As shown, the elongated sleeve **110** is hollow with openings **125** at the first sleeve end **130** and second sleeve end **140,** and has therein a linear slot **160** opposed by linear slot edges **170** and **180.** One of the linear slot edges **180** is shown with two outwardly extending tabs **210.** The linear slot **160** further is shown running in parallel with the longitudinal axis **150.** The attachment member **120** is shown near the first sleeve end **130** having therein threads **200** for accepting fasteners.

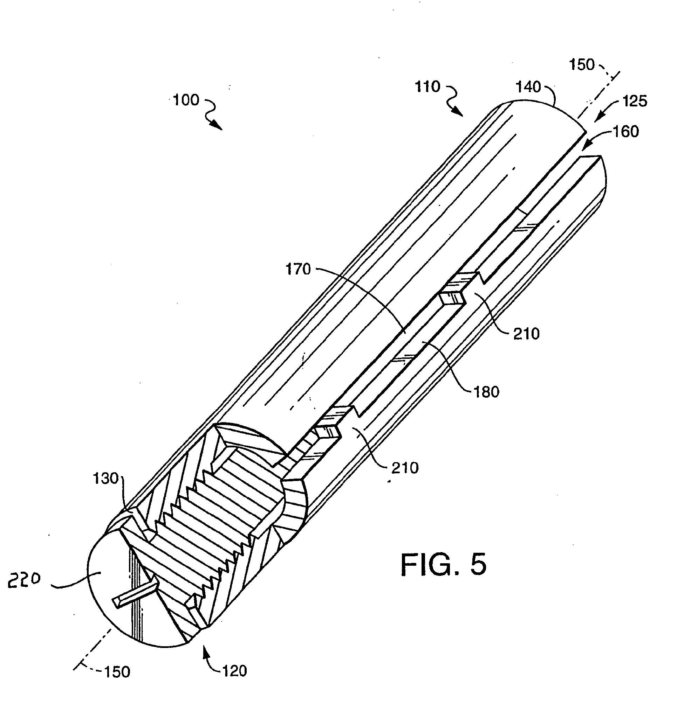

FIG. 5 depicts a threaded fastener **220** secured within a sleeve anchor **100** with the first sleeve end **130** cut away. As shown, the attachment member **120** is positioned near the first sleeve end **130** along the elongated sleeve 110. The attachment member **120** comprises threads **200** for accepting the threaded fastener **220.** The linear slot **160** extends in parallel with the longitudinal axis **150** from the first sleeve end **130** to the second sleeve end **140.** The linear slot is opposed by the linear slot sleeve edges **170** and **180.** Two outwardly extending tabs **210** are positioned along one of the linear slot sleeve edges **170** or **180.** As depicted, the threaded fastener **220** is secured within the attachment member **120** and engaged with the threads **200.**

According to one aspect of the present invention, the threads **200** and elongated sleeve **110** are configured to be oversized in relation to the mating hole so that when the anchor **100** is placed within the mating hole, the elongated sleeve **110** will collapse just enough to secure the anchor **100** in the hole and allow the threads **200** to cooperate with the threads of the mating fastener.

All publications and patents mentioned in the above specification are herein incorporated by reference. Variations and modifications of the foregoing are within the scope of the present invention. It should be understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention. The claims are to be construed to include alternative embodiments to the extent permitted by the prior art.

Various features of the invention are set forth in the following claims.

## Claims

1. An anchor for insertion into a hole having sides, said anchor comprising:
an elongated sleeve comprising two ends and an exterior surface, said elongated sleeve having a longitudinal axis and having therein a slot parallel to said longitudinal axis, said slot running the length of said elongated sleeve; and
an attachment member on one of said two ends of said elongated sleeve, said elongated sleeve being insertable into the hole so that said linear slot collapses as said exterior surface of said elongated sleeve engages the sides of the hole thereby securing said elongated sleeve within the hole.

2. The device of claim 1, wherein said linear slot is defined by opposing first and second sleeve edges.

3. The device of claim 2, wherein said opposing first and second sleeve edges engage upon insertion of said device into the hole.

4. The device of claim 2, wherein at least one of said opposing first and second sleeve edges comprises at least one outwardly extending tab.

5. The device of claim 2, wherein the other of said opposing first and second sleeve edges is substantially linear.

6. The device of claim 5, wherein said at least one outwardly extending tab engages said linear sleeve edge upon insertion of said device into the hole.

7. The device of claim 1, wherein said attachment member comprises threads.

8. The device of claim 7, wherein said threads are on the inside of said elongated sleeve and engageable with a threaded fastener.

9. The device of claim 7, wherein said threads are on the outside of said elongated sleeve and engageable with a threaded fastener.

10. The device of claim 1, wherein said attachment member comprises an outwardly extending member having an opening therein.

11. An anchor device comprising:
an elongated sleeve including two ends and an interior surface, said elongated sleeve having a longitudinal axis and having therein a slot parallel to said longitudinal axis, said slot running the length of said elongated sleeve and defined by opposing first and second sleeve edges, at least of one of said first and second sleeve edges having at least one outwardly extending tab; and
an attachment member on one of said two ends of said elongated sleeve, said attachment member including threads on said interior surface of said end of said elongated sleeve, wherein upon compression of said elongated sleeve said slot collapses so that said outwardly extending tab engages the other of said sleeve edges, and wherein said threads are engageable with a threaded fastener.

12. A system for anchoring an object in a hole comprising:
an anchor device having an elongated sleeve comprising two ends and an interior surface, said elongated sleeve having a longitudinal axis and having therein a slot parallel to said longitudinal axis, said slot running the length of said elongated sleeve and defined by opposing first and second sleeve edges, said anchor device further having an attachment member on one of said two ends of said elongated sleeve, said attachment member comprising threads on said surface of said end of said elongated sleeve, said anchor being adapted for insertion into the hole; and
a threaded fastener for engagement with said threads of said attachment member.

13. The system of claim 12, wherein said opposing first and second sleeve edges are configured to engage one another upon compression of said elongated sleeve by inserting said elongated sleeve into said hole so that said threads are engageable with said threaded fastener.

14. The system of claim 13, wherein at least one of said opposing first and second sleeve edges comprises at least one outwardly extending tab, wherein upon compression of said elongated sleeve said slot collapses so that said outwardly extending tab engages the other of said sleeve edges and said threads are engageable with said threaded fastener.

15. The system of claim 13, wherein said threads are on the interior surface of said surface of said end of said elongated sleeve.

16. The system of claim 13, wherein said threads are on the exterior surface of said surface of said end of said elongated sleeve.
